# EUROPÄISCHE PATENTANMELDUNG

(11) **EP 3 388 183 A1**
(43) Veröffentlichungstag der Anmeldung: **17.10.2018**
(21) Anmeldenummer: 17166559.9
(22) Anmeldetag: 13.04.2017
(51) Int. Cl.: B23K 9/28, B23K 9/29, B23K 9/32, B23K 9/167

(54) **SCHWEISSBRENNERKÖRPER, SCHWEISSBRENNERGRIFF UND SCHWEISSBRENNER MIT EINEM SOLCHEN SCHWEISSBRENNERKÖRPER UND SCHWEISSBRENNERGRIFF**

(71) Anmelder: Fronius International GmbH, 4643 Pettenbach (AT)
(72) Erfinder: PREUNDLER, David, 4643 Pettenbach (AT); OBERNDORFER, Klaus, 4643 Pettenbach (AT); PREUNDLER, Anton, 4643 Pettenbach (AT); ZEITLINGER, Alexander, 4643 Pettenbach (AT)
(74) Vertreter: Sonn & Partner Patentanwälte

(57) **Zusammenfassung**

Die Erfindung betrifft einen Schweißbrennerkörper (2), einen Schweißbrennergriff (8) sowie einen Schweißbrenner (1), insbesondere WIG-Schweißbrenner. Zur Schaffung einer einfach realisierbaren steckbaren Verbindung zwischen Schweißbrennerkörper (2) und Schweißbrennergriff (8) sowohl für gasgekühlte als auch wassergekühlte Schweißbrenner (1) mündet der Gaskanal (10) vor dem distalen Ende (11) des Steckelements (7) in einer mantelseitig am Steckelement (7) angeordneten Einlassöffnung (16). Im Schweißbrennergriff (8) ist ein zum zentralen Kanal (33) koaxial angeordneter zweiter Kanal (34) und ein weiterer koaxial zum zweiten Kanal angeordneter dritter Kanal (35) vorgesehen, wobei zwischen zweitem Kanal (34) und drittem Kanal (35) eine Verbindung (36) vorgesehen ist.

## Beschreibung

Die Erfindung betrifft einen Schweißbrennerkörper, insbesondere WIG-Schweißbrennerkörper, mit einem Brennerhals, einem Elektrodenhalter zur Aufnahme einer Schweißelektrode, einer Gasdüse und einem im Brennerhals angeordneten im Wesentlichen zylinderförmigen Steckelement zur lösbaren Verbindung mit einem Aufnahmeteil eines Schweißbrennergriffs, welches Steckelement eine Einlassöffnung für das Schutzgas und einen mit der Einlassöffnung verbundenen Gaskanal zur Führung des Schutzgases zur Gasdüse aufweist und zur Übertragung eines Schweißstromes zum Elektrodenhalter ausgebildet ist.

Weiters betrifft die Erfindung einen Schweißbrennergriff, insbesondere WIG-Schweißbrennergriff, mit einem Stromübertragungselement mit einem zentralen Kanal, und einem Aufnahmeteil zur lösbaren Verbindung mit einem Steckelement eines Schweißbrennerkörpers.

Schließlich ist die Erfindung auf einen Schweißbrenner, insbesondere WIG-Schweißbrenner, mit einem oben genannten Schweißbrennerkörper und einem oben genannten Schweißbrennergriff gerichtet.

Schweißbrenner, insbesondere WIG (Wolfram-Intergas)-Schweißbrenner mit einer nicht abschmelzenden Wolframelektrode bestehen aus einem Schweißbrennerkörper und einem Schweißbrennergriff, welcher mit einem Schlauchpaket, welches die einzelnen Leitungen für den Schweißstrom, das Schutzgas und das allfällige Kühlmittel enthält, verbunden ist. Um Verschleißteile des Schweißbrenners austauschen zu können aber auch unterschiedliche Arten von Schweißbrennern verwenden zu können, ist der Schweißbrennerkörper häufig lösbar mit dem Schweißbrennergriff und das Schlauchpaket mit den entsprechenden Anschlüssen am Schweißbrennergriff verbunden. Bei der Verbindung zwischen Schweißbrennerkörper und Schweißbrennergriff sind Schraubverbindungen mit Hilfe einer Überwurfmutter sowie Steckverbindungen, welche eine einfachere und raschere Austauschmöglichkeit schaffen, üblich.

Beispielsweise beschreibt die DE 10 2004 021 937 B3 einen Schweißbrenner, bei dem der Brennerkopf über eine Steckverbindung am Brennergriff montierbar ist.

Auch die EP 2 603 345 A1 beschreibt einen WIG-Schweißbrenner mit einem Brennerkörper, der steckbar mit dem Brennergriff verbindbar ist.

Bei Schweißbrennern werden unterschiedlichste Arten, insbesondere solche mit ausschließlich einer Schutzgasleitung aber auch solche mit zusätzlichen Kühlmittelleitungen und ebenso verschiedene Schlauchpakete mit oder ohne Kühlmittelleitung unterschieden. Je nach Verwendung eines gasgekühlten oder wassergekühlten Schweißbrenners und das Vorhandensein eines Schlauchpakets mit oder ohne Kühlmittelleitungen, sind verschiedene Arten von Schweißbrennerkörpern und Schweißbrennergriffen notwendig, welche vom Schweißkomponenten-Hersteller produziert und vom Nutzer angeschafft und gelagert werden müssen. Dies erhöht den Herstellungsaufwand und somit auch die Herstellungs- und Anschaffungskosten.

Die Aufgabe der vorliegenden Erfindung besteht daher in der Schaffung eines oben genannten Schweißbrennerkörpers, Schweißbrennergriffs und Schweißbrenners, insbesondere WIG-Schweißbrenners, welche für sämtliche Varianten, insbesondere gasgekühlte Variante und wassergekühlte (bzw. Kühlmittel-gekühlte) Variante möglichst identisch aufgebaut sein sollen, sodass der Schweißkomponenten-Hersteller nicht für jede Variante eigene Komponenten herstellen muss und der Schweißer nicht für jede Variante an Schweißbrennern entsprechend viele Komponenten anschaffen und lagern muss. Insbesondere soll die vorliegende Erfindung eine Verbindung eines gas- bzw. wassergekühlten Schweißbrennerkörpers mit im Wesentlichen demselben Schweißbrennergriff und die Verbindung dieses Schweißbrennergriffs mit unterschiedlichen Schlauchpaketen (mit und ohne Kühlmittelleitungen) zulassen. Nachteile bekannter Konstruktionen sollen vermieden oder zumindest reduziert werden.

Die Aufgabe der Erfindung wird durch einen oben genannten Schweißbrennerkörper gelöst, bei dem der Gaskanal vor dem distalen Ende (dem Ende, welches dem Schweißbrennergriff zugewandt ist) des Steckelements in einer mantelseitig am Steckelement angeordneten Einlassöffnung mündet. Dadurch, dass der Gaskanal im Steckelement des Schweißbrennerkörpers nicht, wie üblich, axial in der Mitte vorlaufend angeordnet und mit der Gasdüse verbunden ist, können mehr Optionen beim Anschließen des Schweißbrennerkörpers am Schweißbrennergriff geschaffen werden. Darüber hinaus ist der Schweißbrennerkörper der gegenständlichen Art relativ einfach und kostengünstig herstellbar. Im Steckelement des Schweißbrennerkörpers können auch andere Kanäle oder dergl. vorgesehen sein, welche mit entsprechenden Kanälen im Schweißbrennergriff zusammenwirken, um einen gewünschten Verlauf des Schutzgases und allfälliger Kühlmittel durch die Kanäle erzielen zu können.

Vorteilhafterweise ist das Steckelement zur steckbaren Verbindung mit dem Aufnahmeteil des Schweißbrennergriffs ausgebildet und weist einen sogenannten Brennerverschluss auf, welcher zur Fixierung am Aufnahmeteil des Schweißbrennergriffs, vorzugsweise um 180° verdrehbar, ausgebildet ist. Dadurch wird eine rasche, einfache und vor allem werkzeuglose Befestigung und Lösung des Schweißbrennerkörpers am bzw. vom Schweißbrennergriff ermöglicht. Der Brennerverschluss kann verschiedenartig konstruiert werden, um die Fixierung durch eine axiale Bewegung und eine Verdrehung zu ermöglichen. Beispielsweise sind bajonettartige Verschlüsse denkbar.

Bei einem wassergekühlten Schweißbrennerkörper weist das Steckelement einen Kanal zur Zuführung eines Kühlmittels und einen Kanal zur Rückführung des Kühlmittels auf, wobei der Kanal zur Zuführung des Kühlmittels mit einer im Wesentlichen zentralen Eintrittsmündung am distalen Ende des Steckelements für das Kühlmittel und der Kanal zur Rückführung des Kühlmittels mit einer mantelseitig am Steckelement angeordneten Rückführöffnung für das Kühlmittel verbunden ist. Dadurch wird ein gekühlter Schweißbrennerkörper geschaffen, der mit einem entsprechenden Schweißbrennergriff einfach und rasch verbindbar ist und dessen Kanäle zur Führung des Schutzgases und Kühlmittels je nach verwendetem Schlauchpaket (mit oder ohne Kühlmittelleitungen) entsprechend verbunden werden können. Obgleich meist Wasser als Kühlmittel verwendet wird, sind auch andere Kühlflüssigkeiten oder Kühlgase denkbar.

Gemäß einem weiteren Merkmal der Erfindung ist der Brennerverschluss im Wesentlichen rohrförmig ausgebildet und weist dieser an der Außenseite Fixierelemente auf, welche mit komplementär gestalteten Fixierelementen am Aufnahmeteil des Schweißbrennergriffs zusammenwirken. Dies stellt eine einfache Realisierungsmöglichkeit für die Verbindung des Schweißbrennerkörpers mit dem Schweißbrennergriff durch eine kombinierte axiale und drehende Bewegung, vorzugsweise um 180 Grad dar. Die Fixierelemente können durch entsprechende Rastnasen und Führungsnuten oder dergleichen gebildet sein.

Das Steckelement - hier zumindest der stromführende Teil - ist vorzugsweise aus Metall, insbesondere Messing, und der Brennerverschluss aus Kunststoff gebildet. Derartige Materialien haben sich als besonders geeignet herausgestellt, da sie entsprechend leicht bearbeitbar sind und den beim Schweißen auftretenden Temperaturen standhalten. Zusätzlich können auch sicherheitsrelevante Funktionen, wie z.B. die Einhaltung von Kriechstrecken, erfüllt werden.

Gelöst wird die erfindungsgemäße Aufgabe auch durch einen oben genannten Schweißbrennergriff, insbesondere WIG-Schweißbrennergriff, bei dem ein zum Kanal koaxial angeordneter zweiter Kanal und ein weiterer koaxial zum zweiten Kanal angeordneter dritter Kanal vorgesehen ist, wobei zwischen zweitem Kanal und drittem Kanal eine Verbindung vorgesehen ist. Unter der koaxialen Anordnung, wird eine Anordnung in verschiedenen Abständen von der Mittelachse des Schweißbrennergriffs verstanden. Die Kanäle können unterschiedlich realisiert werden, beispielsweise als bloße Bohrungen aber auch in Form von Ringräumen oder dergleichen. Durch die spezielle Anordnung insgesamt dreier Kanäle zur Führung des Schutzgases und bzw. oder eines Kühlmittels, insbesondere Wassers, wird je nach Anschluss der Leitungen und Schläuche des Schlauchpakets ein verschiedenartiges Durchströmen der Kanäle mit dem Schutzgas oder Kühlmittel ermöglicht. Schließlich mündet das Schutzgas und Kühlmittel in den entsprechenden Kanälen im jeweiligen angeschlossenen Schweißbrennerkörper. Somit wird mit der Herstellung eines im Wesentlichen gleichartig ausgebildeten Schweißbrennergriffs der Anschluss sowohl eines gasgekühlten als auch wassergekühlten Schweißbrennerkörpers und die Verbindung mit einem Schlauchpaket mit oder ohne Kühlmittelleitungen ermöglicht. Je nach gewünschter Kombination sind allenfalls Abdichtelemente zum Abdichten eines Kanals oder der Abdichtung von Bereichen zwischen Kanälen (z.B. mittels O-Ringe), usw. oder ähnliche Hilfsmittel erforderlich, welche weiter unten beschrieben werden.

Vorteilhafterweise weist der erste Kanal eine Mündung im Zentrum des Aufnahmeteils, der zweite Kanal eine Mündung mantelseitig des Aufnahmeteils und der dritte Kanal eine Mündung mantelseitig des Aufnahmeteils auf. Durch eine derartige Anordnung der Mündungen der Kanäle innerhalb des Aufnahmeteils wird bei der Verbindung mit dem entsprechend gestalteten Steckelement des Schweißbrennerkörpers je nach verwendeten Schweißmedien (Schutzgas und allenfalls Kühlmittel) ein unterschiedlicher Verlauf des Schutzgases und des Kühlmittels erzielt und die Anwendung sowohl eines gasgekühlten Schweißbrennerkörpers als auch eines wassergekühlten Schweißbrennerkörpers am selben Schweißbrennergriff ermöglicht. Die mantelseitig am Aufnahmeteil angeordnete Mündung des dritten Kanals liegt an der selben Stelle wie die mantelseitig angeordnete Mündung des Gaskanals des Schweißbrennerkörpers bzw. korrespondiert mit dieser. Die Mündung des ersten Kanals im Aufnahmeteil korrespondiert bei angeschlossenem Schweißbrennerkörper mit der Mündung des Kanals zur Zuführung eines Kühlmittels im Steckelement des Schweißbrennerkörpers. Die Mündung des zweiten Kanals mantelseitig des Aufnahmeteils korrespondiert wiederum mit der mantelseitig angeordneten Rückführöffnung für das Kühlmittel am Steckelement des Schweißbrennerkörpers . Am Ende des Schweißbrennergriffs, welches dem Schlauchpaket zugewandt ist, sind entsprechende Anschlüsse für den Schweißstrom, das Schutzgas und das Kühlmittel vorgesehen, welche je nach verwendetem Schlauchpaket entsprechend angeschlossen werden.

Das Stromübertragungselement besteht vorzugsweise aus einer Hülse aus elektrisch leitfähigem Material mit axial angeordneten Schlitzen zur Bildung des zweiten Kanals und einer Spreizhülse aus elektrisch isolierendem Material, wobei der zentrale Kanal im Inneren der Spreizhülse verlaufend angeordnet ist. Eine derartige Konstruktion beinhaltet sowohl den ersten zentralen Kanal im Schweißbrennergriff als auch den zweiten koaxial zum ersten Kanal angeordneten zweiten Kanal in entsprechend platzsparender Weise. Durch die Spreizhülse aus elektrisch isolierendem Material wird auch ein entsprechend guter elektrischer Kontakt zur Übertragung des Schweißstromes hergestellt, da der Durchmesser der Hülse durch die Spreizhülse vergrößert und ein entsprechender Anpressdruck an die zu kontaktierenden Elemente hergestellt wird. Darüber hinaus bildet die Spreizhülse die Trennung zwischen zentralem Kanal und zweitem Kanal. Je nachdem welches Medium durch die Kanäle strömt, wird dadurch auch das Stromübertragungselement entsprechend gut gekühlt.

Wenn zumindest ein Abdichtelement zum Abdichten zumindest eines Kanals vorgesehen ist, können in einfacher Weise die Bedingungen zum Anschließen des Schweißbrennergriffs an ein Schlauchpaket ohne Kühlmittelleitungen geschaffen werden. Somit kann der Schweißbrennergriff auch bloß zum Übertragen des Schutzgases verwendet werden, während die anderen Kanäle, welche zur Führung eines Kühlmittels dienen würden, durch entsprechende Abdichtelemente verschlossen werden.

Wenn gemäß einem weiteren Merkmal der Erfindung ein Rohr zum Einschieben in den dritten Kanal und gleichzeitigen Abdichten der Verbindung vorgesehen ist, kann eine weitere Veränderung des Verlaufs des Schutzgases oder Kühlmittels in den Kanälen des Schweißbrennergriffs für bestimmte Anwendungen in einfacher Weise erzielt werden.

Gemäß einem weiteren Merkmal der Erfindung weist der Aufnahmeteil an der Innenseite Fixierelemente auf, welche mit komplementär gestalteten Fixierelementen am Brennerverschluss des Schweißbrennerkörpers zusammenwirken. Wie bereits oben im Zusammenhang mit dem Schweißbrennerkörper erwähnt, können die Fixierelemente durch entsprechende Rastnasen und Führungsnuten oder dergl. gebildet sein, um die Fixierung des Schweißbrennerkörpers gegenüber dem Schweißbrennergriff durch eine kombinierte axiale Bewegung und Drehbewegung erzielen zu können. Auf diese Weise wird eine einfache, rasche und werkzeuglose Montage und Demontage des Schweißbrennerkörpers am und vom Schweißbrennergriff ermöglicht.

Um ein ungewolltes Lösen des Schweißbrennerkörpers vom Schweißbrennergriff zu verhindern oder zu erschweren, kann ein Entriegelungselement zum Entriegeln der Fixierung des Schweißbrennerkörpers am Schweißbrennergriff vorgesehen sein. Ein derartiges Entriegelungselement ist vorzugsweise durch einen federvorgespannten Betätigungsknopf gebildet, den der Schweißer vor dem Lösen des Schweißbrennerkörpers vom Schweißbrennergriff gegen die Federkraft drücken oder verschieben muss.

Im dritten Kanal des Schweißbrennergriffs kann ein Rückschlagventil angeordnet sein. Durch ein derartiges Rückschlagventil kann verhindert werden, dass Rückstände eines flüssigen Kühlmittels, insbesondere von Wasser, aus dem dritten Kanal in den Gaskanal des Schweißbrennerkörpers gelangt, was beim Schweißen zu einem Schweißqualitätsverlust führen könnte. Vor dem Rückschlagventil allenfalls vorhandene Wassertröpfchen und Rückstände des Kühlmittels werden üblicherweise vor Durchführung des Schweißverfahrens durch Ausblasen mit Druckluft entfernt.

Zur Betätigung des Schweißbrenners ist am Schweißbrennergriff ein Schalter, Taster oder dergl. Betätigungselement zum Ein- und Ausschalten des Schweißstromes angeordnet.

Die erfindungsgemäße Aufgabe wird auch durch einen oben genannten Schweißbrenner, insbesondere WIG-Schweißbrenner, mit einem oben genannten Schweißbrennerkörper und einem oben genannten Schweißbrennergriff gelöst. Zu den dadurch erzielbaren Vorteilen gegenüber bekannten Schweißbrennern, insbesondere die höhere Flexibilität bei der Kombination gasgekühlter Schweißkomponenten mit wassergekühlten Schweißkomponenten wird auf die obige Beschreibung des Schweißbrennerkörpers und Schweißbrennergriffs verwiesen.

Die Erfindung wird anhand der beigefügten Zeichnungen näher erläutert. Darin zeigen:
- Fig. 1: eine schematische Ansicht eines erfindungsgemäßen WIG-Schweißbrenners;
- Fig. 2: eine schematische Ansicht eines Teils eines erfindungsgemäß ausgebildeten gasgekühlten Schweißbrennerkörpers;
- Fig. 3: eine schematische Ansicht eines Teils eines erfindungsgemäß ausgebildeten wassergekühlten Schweißbrennerkörpers;
- Fig. 4: eine schematische Ansicht eines erfindungsgemäß ausgebildeten Schweißbrennergriffs zur steckbaren Verbindung mit einem Schweißbrennerkörper gemäß Fig. 2 oder Fig. 3;
- Fig. 5: einen schematischen Verlauf des Schutzgases bei Verbindung eines gasgekühlten Schweißbrennerkörpers gemäß Fig. 2 mit dem Schweißbrennergriff gemäß Fig. 4 und einem gasgekühlten Schlauchpaket;
- Fig. 6: einen schematischen Verlauf des Schutzgases und Kühlmittels bei Verbindung eines gasgekühlten Schweißbrennerkörpers gemäß Fig. 2 mit dem Schweißbrennergriff gemäß Fig. 4 und einem wassergekühlten Schlauchpaket;
- Fig. 7: einen schematischen Verlauf des Schutzgases bei Verbindung eines wassergekühlten Schweißbrennerkörpers gemäß Fig. 3 mit dem Schweißbrennergriff gemäß Fig. 4 und einem gasgekühlten Schlauchpaket;
- Fig. 8: einen schematischen Verlauf des Schutzgases und Kühlmittels bei Verbindung eines wassergekühlten Schweißbrennerkörpers gemäß Fig. 3 mit dem Schweißbrennergriff gemäß Fig. 4 und einem wassergekühlten Schlauchpaket;
- Fig. 9: einen schematischen Verlauf des Schutzgases bei einer zu Fig. 5 alternativen Verbindung eines gasgekühlten Schweißbrennerkörpers gemäß Fig. 3 mit dem Schweißbrennergriff gemäß Fig. 4 und einem gasgekühlten Schlauchpaket.

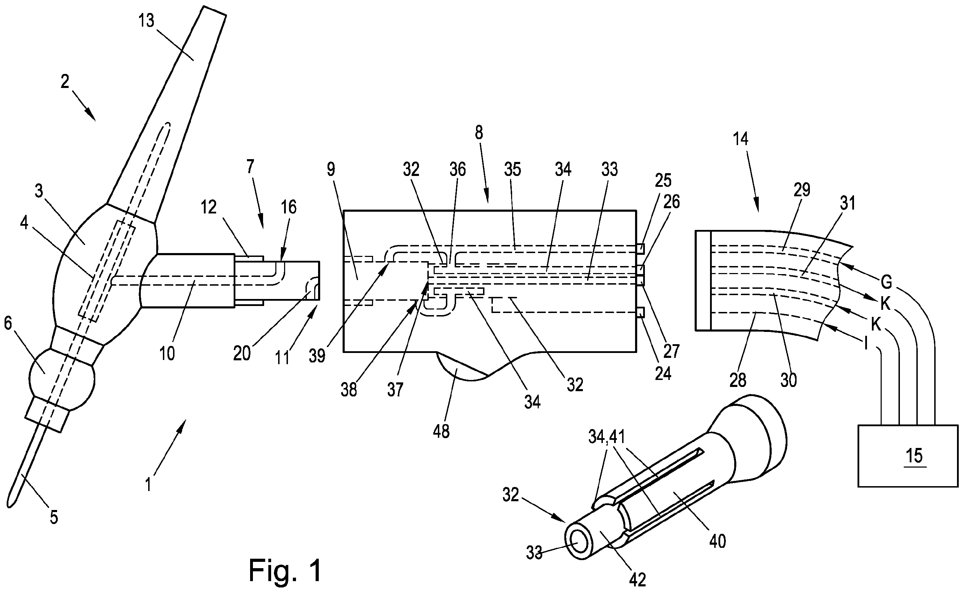

Fig. 1 zeigt eine schematische Ansicht eines Schweißbrenners 1, insbesondere eines WIG-Schweißbrenners. Der Schweißbrenner 1 besteht aus dem Schweißbrennerkörper 2, insbesondere WIG-Schweißbrennerkörper, und dem Schweißbrennergriff 8, insbesondere WIG-Schweißbrennergriff. Der Schweißbrennerkörper 2 ist lösbar, vorzugsweise werkzeuglos lösbar, mit dem Schweißbrennergriff 8 verbindbar. Der Schweißbrennergriff 8 wiederum wird mit einem entsprechenden Schlauchpaket 14 bzw. den darin verlaufenden Leitungen und Schläuchen verbunden.

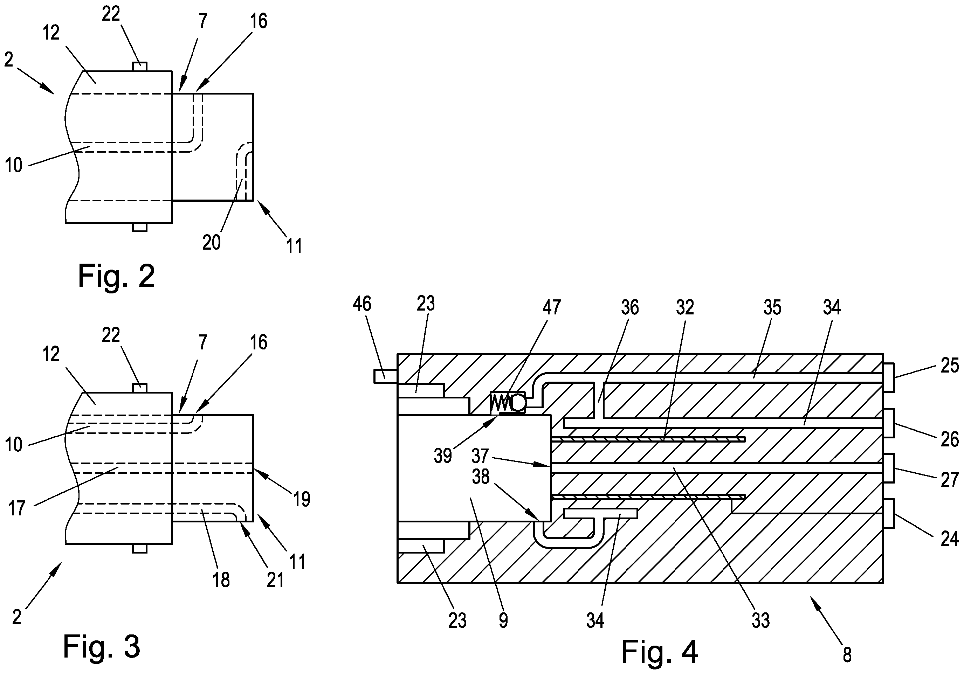

Der Schweißbrennerkörper 2 des Schweißbrenners 1 besteht aus dem sogenannten Brennerhals 3, einem Elektrodenhalter 4 zur Aufnahme einer Schweißelektrode 5, beispielsweise einer nicht abschmelzenden Wolframelektrode, einer Gasdüse 6 und einem im Brennerhals 3 angeordneten im Wesentlichen zylinderförmigen Steckelement 7 zur lösbaren Verbindung mit einem korrespondierenden Aufnahmeteil 9 des Schweißbrennergriffs 8. Im Steckelement 7 des Schweißbrennerkörpers 2 verläuft der Gaskanal 10 zur Führung des Schutzgases G zur Gasdüse 6. Erfindungsgemäß verläuft der Gaskanal 10 nicht nur axial im Steckelement 7, sondern mündet dieser Gaskanal 10 vor dem distalen Ende 11 des Steckelements 7 in einer mantelseitig am Steckelement 7 angeordneten Einlassöffnung 16. Durch diesen speziellen Verlauf des Gaskanals 10 kann ein spezieller Verlauf des Schutzgases G aber auch des allfälligen Kühlmittels K im Schweißbrennerkörper 2 erzielt werden. Das Steckelement 7 des Schweißbrennerkörpers 2 ist vorzugsweise zur steckbaren Verbindung mit dem Aufnahmeteil 9 des Schweißbrennergriffs 8 ausgebildet und weist einen sogenannten Brennerverschluss 12 auf, welcher zur Fixierung am Aufnahmeteil 9 des Schweißbrennergriffs 8, vorzugsweise um 180° verdrehbar, ausgebildet ist. Beispielsweise wird der Schweißbrennerkörper 2 um 180° gegenüber der in Fig. 1 dargestellten Position verdreht in den Aufnahmeteil 9 des Schweißbrennergriffs 8 axial eingeschoben, und sodann durch Drehung um 180° zurück in die in Fig. 1 dargestellte Position mit dem Schweißbrennergriff 8 verriegelt. Zu diesem Zweck sind entsprechende Fixierelemente 22 an der Außenseiten des Brennerverschlusses 12 und komplementär gestaltete Fixierelemente 23 an der Innenseite des Aufnahmeteils 9 des Schweißbrennergriffs 8 angeordnet, wie es in den Figuren 2, 3 und 4 dargestellt ist. Unter der Voraussetzung bestimmter Mechanismen, kann eine Drehbarkeit des Schweißbrennerkörpers 2 oder zumindest eines Teils davon und eine Fixierung desselben in unterschiedlichen Winkelpositionen ermöglicht werden.

Das Steckelement 7 weist einen weiteren Kanal 20 auf, der mit den weiter unten beschriebenen Kanälen 33 und 34 im Schweißbrennergriff 8 zusammenwirkt und einen entsprechenden Verlauf der Schweißmedien (Schutzgas G und Kühlmittel K) ermöglicht. Anstelle des Kanals 20 können auch andere Konstruktionen des Steckelements 7, beispielsweise Hinterschneidungen oder dergl. ebenfalls vorgesehen sein, welche die Kommunikation der Kanäle 33 und 34 im Schweißbrennergriff 8 ermöglichen.

Sofern der Schweißbrennerkörper 2 über eine Wasserkühlung oder Kühlung mit einem anderen Kühlmittel K verfügt, befindet sich im Steckelement 7 auch ein Kanal 17 zur Zuführung des Kühlmittels K und ein Kanal 18 zur Rückführung des Kühlmittels K, wie anhand des Beispiels gemäß Fig. 3 erläutert werden wird.

Der Schweißbrennergriff 8 beinhaltet vorzugsweise Anschlüsse 24, 25, 26 und 27 zur Verbindung mit einer entsprechenden Schweißstromleitung 28 zur Übertragung des Schweißstroms I, einer Schutzgasleitung 29 zur Förderung eines Schutzgases G und allenfalls einer Kühlmittelzuführung 30 und einer Kühlmittelrückführung 31 eines Schlauchpakets 14, über die ein Kühlmittel K, insbesondere Wasser, zu- und abgeführt wird. Das Schlauchpaket 14 kann auch fix mit dem Schweißbrennergriff 8 verbunden sein und als Einheit vertrieben werden. Üblicherweise sind derartige Einheiten in unterschiedlichen Schlauchpaketlängen erhältlich. Das Schlauchpaket 14 ist entsprechend mit dem Schweißgerät 15 verbunden, welches die Stromquelle für die Bereitstellung des Schweißstroms I, einen Speicher zur Bereitstellung des Schutzgases G sowie einen Behälter für das Kühlmittel K beinhaltet.

Der Schweißbrennergriff 8 weist weiters ein Stromübertragungselement 32 zur Übertragung des Schweißstroms I auf, der einen zentralen Kanal 33 umfasst. Weiters ist im Schweißbrennergriff 8 der Aufnahmeteil 9 zur lösbaren Verbindung mit dem Steckelement 7 des Schweißbrennerkörpers 2 angeordnet. Erfindungsgemäß weist das Stromübertragungselement 32 neben dem zentralen Kanal 33 einen zum zentralen Kanal 33 koaxial angeordneten zweiten Kanal 34 auf und ist ein weiterer koaxial zum zweiten Kanal angeordneter dritter Kanal 35 vorgesehen, wobei zwischen dem zweiten Kanal 34 und dem dritten Kanal 35 eine Verbindung 36 angeordnet ist. Der zweite Kanal 34 ist vorzugsweise zumindest teilweise als Ringraum ausgebildet, der um den zentralen Kanal 33 verläuft. Der zweite Kanal 34 ist mit dem Anschluss 26 und der dritte Kanal 35 mit dem Anschluss 25 verbunden. Über den Anschluss 24 wird der von der Stromquelle des Schweißgerätes 15 (s. Fig. 1) gelieferte Schweißstrom I mit dem Stromübertragungselement 32 verbunden.

Zur Erzielung bestimmter Verläufe des Schutzgases G und des Kühlmittels K sind die Mündungen der Kanäle 33, 34, 35 im Aufnahmeteil 9 des Schweißbrennergriffs 8 entsprechend angeordnet. Der erste, zentrale Kanal 33 des Schweißbrennergriffs 8 mündet in einer Mündung 37 im Wesentlichen im Zentrum des Endes des Aufnahmeteils 9. Der zweite Kanal 34 ist mit einer Mündung 38 mantelseitig des Aufnahmeteils 9 verbunden. Schließlich mündet der dritte Kanal 35 in einer mantelseitig des Aufnahmeteils 9 angeordneten Mündung 39. Bei entsprechender Verbindung des Schweißbrennerkörpers 2 mit dem Schweißbrennergriff 8 korrespondiert die Mündung 39 des Kanals 35 mit der Einlassöffnung 16 des Gaskanals 10 am Steckelements 7 des Schweißbrennerkörpers 2, sodass der Verlauf des Schutzgases G über den Schweißbrennergriff 8 zum Schweißbrennerkörper 2 ermöglicht wird. Für bestimmte Anwendungen ist es erforderlich den zentralen Kanal 33 mit dem zweiten Kanal 34 zu verbinden, was bei angeschlossenem Schweißbrennerkörper 2, beispielsweise über den Kanal 20 im Steckelement 7 bewerkstelligt wird.

Es wird darauf hingewiesen, dass die dargestellten Verläufe und Mündungen der Kanäle nur ein Ausführungsbeispiel zeigen, welches im Rahmen der vorliegenden Erfindung aber auch entsprechend abgewandelt werden kann.

Beim wassergekühlten Schweißbrennerkörper 2 (s. Fig. 3) korrespondieren die Öffnungen bzw. Mündungen der Kühlmittelkanäle entsprechend mit den Mündungen im Aufnahmeteil 9 des Schweißbrennergriffs 8, sodass ein Verlauf des Schutzgases G bzw. Kühlmittels K durch die gewünschten Kanäle ermöglicht wird.

Der zentrale Kanal 33 sowie der zweite Kanal 34 können durch ein Stromübertragungselement 32, welches beispielsweise aus einer Hülse 40 aus elektrisch leitfähigem Material mit axial angeordneten Schlitzen 41 aufgebaut ist, gebildet sein. Die axial angeordneten Schlitze 41 bilden dabei den zweiten Kanal 34 bzw. einen Teil davon. Zur Trennung des zweiten Kanals 34 von dem zentralen Kanal 33 wird in der Hülse 40 eine Spreizhülse 42 aus elektrisch isolierendem Material angeordnet, welche auch für einen guten elektrischen Kontakt innerhalb des Schweißbrennergriffs 8 sorgt. Ein Ausführungsbeispiel eines solchen Stromübertragungselements 32 ist im rechten unteren Teil der Fig. 1 dargestellt.

Am Schweißbrennergriff 8 kann weiters ein Schalter 48, Taste oder ähnliches Betätigungselement zum Ein- und Ausschalten des Schweißstroms I angeordnet sein.

In Fig. 2 ist eine Ausführungsform eines erfindungsgemäßen gasgekühlten Schweißbrennerkörpers 2 dargestellt. Zusätzlich zur Ausführungsvariante gemäß Fig. 1 ist hier ein Fixierelement 22 am Brennerverschluss 12 des Schweißbrennerkörpers 2 dargestellt, welches mit einem entsprechend gestalteten Fixierelement 23 am Aufnahmeteil 9 des Schweißbrennergriffs 8 zusammenwirkt und die Fixierung des Schweißbrennerkörpers 2 am Schweißbrennergriff 8 durch eine kombinierte axiale und drehende Bewegung ermöglicht.

Fig. 3 zeigt eine schematische Ansicht eines erfindungsgemäßen wassergekühlten Schweißbrennerkörpers 2. Der wassergekühlte Schweißbrennerkörper 2 weist neben dem Gaskanal 10 mit der Einlassöffnung 16 einen weiteren Kanal 17 zur Zuführung eines Kühlmittels K auf, der mit einer im Wesentlichen zentral am distalen Ende 11 des Steckelements 7 befindlichen Eintrittsmündung 19 verbunden ist. Über einen Kanal 18, der mit einer mantelseitig am Steckelement 7 angeordneten Rückführöffnung 21 für das Kühlmittel K verbunden ist, wird das Kühlmittel K von der Gasdüse 6 des Schweißbrennerkörpers 2 zurückgeführt.

Fig. 4 zeigt eine schematische Ansicht eines erfindungsgemäßen Schweißbrennergriffs 8 zur steckbaren Verbindung mit einem Schweißbrennerkörper 2 gemäß Fig. 2 oder Fig. 3. Wie bereits im Zusammenhang mit Fig. 1 beschrieben, befinden sich die Mündungen 37, 38 und 39 der Kanäle 33, 34 und 35 des Schweißbrennergriffs 8 an bestimmten Stellen am Aufnahmeteil 9, wo sie mit den entsprechenden Mündungen oder Öffnungen im Steckelement 7 des jeweiligen Schweißbrennerkörpers 2 übereinstimmen oder korrespondieren.

An der Innenseite des Aufnahmeteils 9 sind Fixierelemente 23 angeordnet, welche mit komplementär gestalteten Fixierelementen 22 am Brennerverschluss 12 des Schweißbrennerkörpers 2 zusammenwirken. Am Schweißbrennergriff 8 kann auch ein Entriegelungselement 46 zum Entriegeln der Fixierung des Schweißbrennerkörpers 2 vorgesehen sein, der vor dem Entfernen des Schweißbrennerkörpers 2 vom Schweißbrennergriff 8 vom Schweißer betätigt werden muss.

Im dritten Kanal 35 kann ein Rückschlagventil 47 angeordnet sein, welches verhindert, dass Rückstände des Kühlmittels K über die Mündung 39 in den Gaskanal 10 des Schweißbrennerkörpers 2 gelangen und dort während des Schweißverfahrens die Schweißqualität verringern könnten. Üblicherweise wird vor dem Einsatz des Schweißbrenners 1 der Aufnahmeteil 9 des Schweißbrennergriffs 8 mit Druckluft ausgeblasen, sodass die möglicherweise vorher mit Kühlmittel K durchströmten Kanäle von Kühlmittelrückständen befreit werden. Wenn das Rückschlagventil 47 - wie dargestellt - unmittelbar an der Mündung 39 angeordnet ist, kann dadurch auch dieser Bereich optimal von Kühlmittelrückständen befreit werden.

Es wird darauf hingewiesen, dass sowohl der Schweißbrennerkörper 2 als auch der Schweißbrennergriff 8 nicht - wie skizziert - aus einem Hauptbestandteil bestehen muss, sondern aus mehreren Teilen gebildet werden kann, welche aus unterschiedlichen Materialien bestehen und durch entsprechende Zusammenstellung die verschiedenen Kanäle und Verbindungselemente gebildet werden.

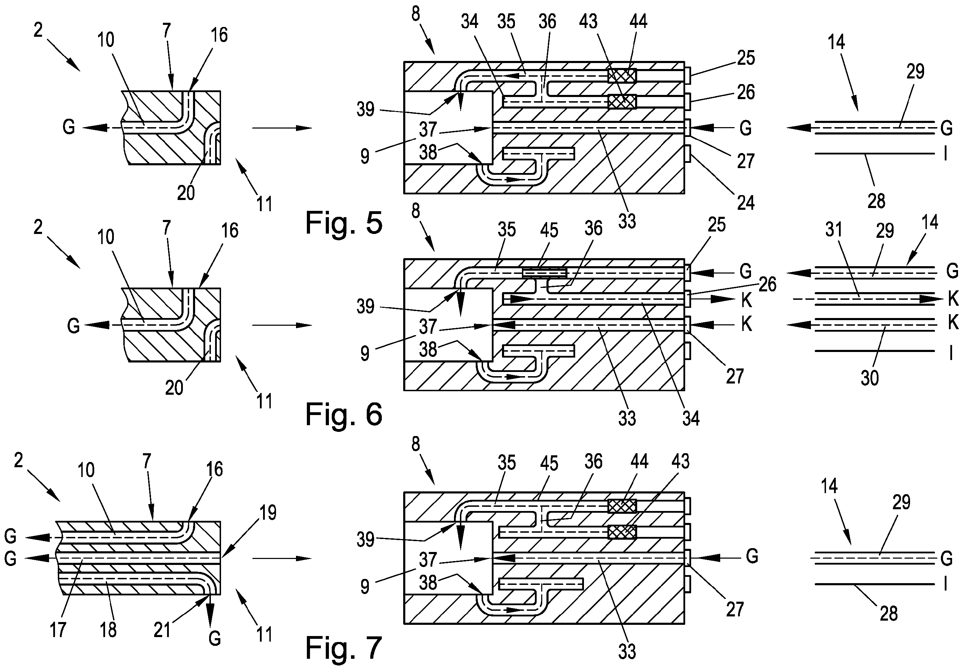

In Fig. 5 ist der schematische Verlauf des Schutzgases G bei Verbindung eines gasgekühlten Schweißbrennerkörpers 2 gemäß Fig. 2 mit dem Schweißbrennergriff 8 gemäß Fig. 4 und einem gasgekühlten Schlauchpaket 14 dargestellt. Die Schweißstromleitung 28 des Schlauchpakets 14 wird mit dem Anschluss 24 für die Zuleitung des Schweißstroms I am Schweißbrennergriff 8 verbunden, um eine Übertragung des Schweißstromes I vom Anschluss 24 auf das Stromübertragungselement 32 des Schweißbrennergriffs 8 und in der Folge über das Steckelement 7 oder dessen stromführenden Teil an den Elektrodenhalter 4 und schließlich die Schweißelektrode 5 des Schweißbrennerkörpers 2 zu ermöglichen.

Die Schutzgasleitung 29 des Schlauchpakets 14 wird mit dem Anschluss 27 des Schweißbrennergriffs 8 zur Zuführung des Schutzgases G verbunden, welche mit dem zentralen Kanal 33 verbunden ist. Bei Anschluss eines gasgekühlten Schweißbrennerkörpers 2 verläuft das Schutzgas G durch den axialen Kanal 33 im Schweißbrennergriff 8 und wird durch den Kanal 20 am Steckelement 7 des Schweißbrennerkörpers 2 mantelseitig umgelenkt, gelangt über die Mündung 38 in den zweiten Kanal 34 des Schweißbrennergriffs 8 und über die Verbindung 36 in den dritten Kanal 35. Über die mantelseitig am Aufnahmeteil 9 angeordnete Mündung 39 des Schweißbrennergriffs 8 gelangt das Schutzgas G in die Einlassöffnung 16 am Steckelement 7 und schließlich zur Gasdüse 6 des Schweißbrennerkörpers 2, wo es den Lichtbogen beim Schweißprozess entsprechend schützt.

Um zu verhindern, dass das Schutzgas G über die Anschlüsse 25, 26 der Kanäle 34, 35 austreten kann, werden entsprechende Abdichtelemente 43, 44 in den Kanälen 34, 35 angeordnet. Diese Abdichtelemente können beispielsweise in die Kanäle 34, 35 eingeschoben und axial fixiert werden. Natürlich können die Abdichtelement 43, 44 auch Dichtringe aus elastischem Material (nicht dargestellt) beinhalten oder auch anders ausgebildet sein, beispielsweise in Form von Kappen oder dergl. an den Anschlüssen 25, 26.

Fig. 6 zeigt den schematischen Verlauf des Schutzgases G und Kühlmittels K bei Verbindung eines gasgekühlten Schweißbrennerkörpers 2 gemäß Fig. 2 mit dem Schweißbrennergriff 8 gemäß Fig. 4 und einem wassergekühlten Schlauchpaket 14. Hier wird die Schutzgasleitung 29 des Schlauchpakets 14 mit dem Anschluss 25 des dritten Kanals 35 verbunden. Die Kühlmittelzuführung 30 wird mit dem Anschluss 27 des zentralen Kanals 33 und die Kühlmittelrückführung 31 mit dem Anschluss 26 des zweiten Kanals 34 verbunden. In den Kanal 35 wird ein Rohr 45 eingeschoben, welches die Verbindung 36 zwischen drittem Kanal 35 und zweitem Kanal 34 verschließt. Somit verläuft das Schutzgas G über den Anschluss 25, den dritten Kanal 35 in die Mündung 39 und in die Einlassöffnung 16 des Gaskanals 10 zur Gasdüse 6 des Schweißbrennerkörpers 2. Das Kühlmittel K verläuft über den zentralen Kanal 33 zur Mündung 37 und wird über den Kanal 20 des Schweißbrennerkörpers 2 in die Mündung 38 und schließlich in den zweiten Kanal 34 des Schweißbrennergriffs 8 umgelenkt, von wo es zur Kühlmittelrückführung 31 des Schlauchpakets 14 gelangt. Durch das Rohr 45 und den Verschluss der Verbindung 36 zwischen zweitem Kanal 34 und drittem Kanal 35 wird ein Fließen des Kühlmittel K in den dritten Kanal 35 verhindert. Dadurch, dass das Kühlmittel K auch durch einen Teil des Schweißbrennergriffs 8 strömt, kann dieses ebenfalls gekühlt werden, insbesondere im Bereich des Stromübertragungselements 32.

Fig. 7 zeigt den schematischen Verlauf des Schutzgases G bei Verbindung eines wassergekühlten Schweißbrennerkörpers 2 gemäß Fig. 3 mit dem Schweißbrennergriff 8 gemäß Fig. 4 und einem gasgekühlten Schlauchpaket 14. Bei dieser Variante wird die Schutzgasleitung 29 des Schlauchpakets 14 mit dem Anschluss 27 des Schlauchbrennergriffs 8 verbunden, wodurch das Schutzgas G durch den zentralen Kanal 33 verläuft, von der Mündung 37 in die zentrale Eintrittsmündung des Kanals 17 am distalen Ende 11 des Steckelements 7 des Schweißbrennerkörpers 2 gelangt, über den Kanal 18 zur Rückführöffnung 21 und über die Mündung 38 im Aufnahmeteil 9 des Schweißbrennergriffs 8 in den zweiten Kanal 34. Schließlich verläuft das Schutzgas G über die Verbindung 36 in den dritten Kanal 35 und über die Mündung 39 die Eintrittsöffnung 16 des Gaskanals 10 am Steckelement 7 des Schweißbrennerkörpers 2. Durch den speziellen Verlauf des Schutzgases G auch durch die Kanäle 17, 18 des Schweißbrennerkörpers 2, wird eine bessere Kühlung desselben ermöglicht.

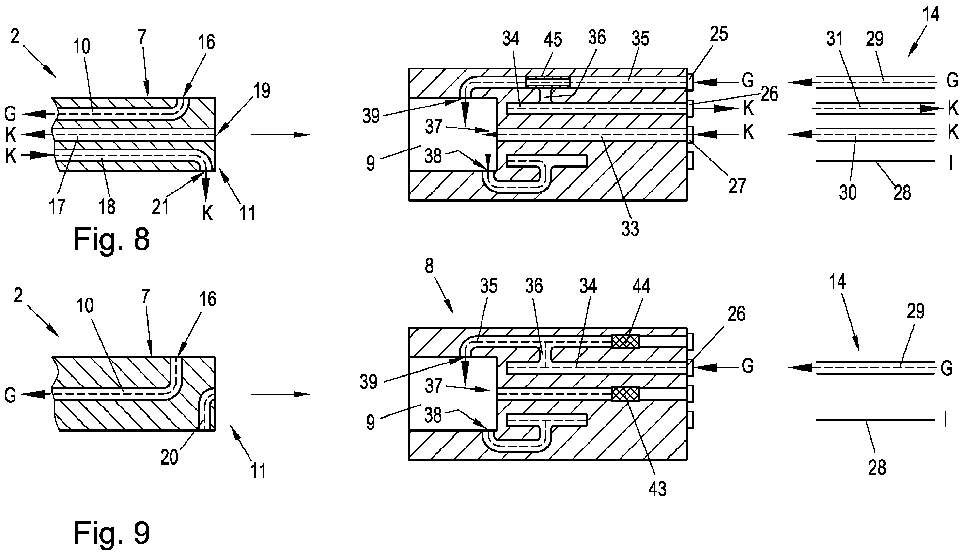

In Fig. 8 ist der schematische Verlauf des Schutzgases G und Kühlmittels K bei Verbindung eines wassergekühlten Schweißbrennerkörpers 2 gemäß Fig. 3 mit dem Schweißbrennergriff 8 gemäß Fig. 4 und einem wassergekühlten Schlauchpaket 14 skizziert. Bei dieser Variante wird die Schutzgasleitung 29 des Schlauchpakets 14 mit dem Anschluss 25 des Schweißbrennergriffs 8 verbunden, wodurch das Schutzgas G über den Kanal 35 zur Mündung 39 und über die Einlassöffnung 16 am Steckelement 7 in den Gaskanal 10 und zur Gasdüse 6 des Schweißbrennerkörpers 2 gelangt. Zur Verhinderung eines Strömens des Schutzgases G über die Verbindung 36 in den zweiten Kanal 34 wird ähnlich wie bei der Variante gemäß Fig. 6 ein Rohr 45 in den Kanal 35 angeordnet, welches die Verbindung 36 verschließt. Die Kühlmittelzuführung 30 des Schlauchpakets 14 wird mit dem Anschluss 27, der mit Kanal 33 des Schweißbrennergriffs 8 verbunden ist, verbunden, sodass das Kühlmittel K über den Kanal 33 und die Mündung 37 in die Eintrittsmündung 19 des Kanals 17 am distalen Ende 11 des Steckelements 7 zur Gasdüse 6 gelangen kann und über den Kanal 18 und die Rückführöffnung 21 schließlich in die Mündung 38 im Aufnahmeteil 9 des Schweißbrennergriffs 8 gelangt und dort in den zweiten Kanal 34 und schließlich zum Anschluss 26, der mit der Kühlmittelrückführung 31 des Schlauchpakets 14 verbunden wird, gelangt.

Schließlich zeigt Fig. 9 einen schematischen Verlauf des Schutzgases G bei einer zur Fig. 5 alternativen Verbindung eines gasgekühlten Schweißbrennerkörpers 2 gemäß Fig. 3 mit dem Schweißbrennergriff 8 gemäß Fig. 4 und einem gasgekühlten Schlauchpaket 14. Diese Variante eignet sich insbesondere für höhere Leistungen, wobei dafür Sorge getragen wird, dass das Schutzgas G im Schlauchpaket 14 nicht durch die Schweißstromleitung 28 zu sehr erwärmt wird und relativ kühl in den Schweißbrennergriff 8 gelangt. Durch diesen speziellen Verlauf des Schutzgases G durch den Schweißbrennergriff 8 kann die kritische Temperatur der Griffschale, welche gemäß einschlägiger Normen nicht mehr als 30° C über der Umgebungstemperatur liegen darf, eingehalten werden. Bei dieser Variante wird die Schutzgasleitung 29 des Schlauchpakets 14 mit dem Anschluss 26 des Schweißbrennergriffs 8 verbunden, welcher mit dem zweiten Kanal 34 in Verbindung steht. Das Schutzgas G gelangt über den zweiten Kanal 34 und die Verbindung 36 in den dritten Kanal 35 und schließlich über die Mündung 39 in die Eintrittsöffnung 16 des Gaskanals 10 im Steckelement 7 des Schweißbrennerkörpers 2. Der zentrale Kanal 33 und der dritte Kanal 35 wird durch ein entsprechendes Abdichtelement 43, 44 abgedichtet. Durch diese alternative Führung des Schutzgases G kann insbesondere der Schweißbrennergriff 8 besser gekühlt werden.

Auch bei den Figuren 5 bis 9 handelt es sich um schematische Darstellungen des Schweißbrennerkörpers 2 und Schweißbrennergriffs 8, welche zur Erzielung der jeweiligen Funktionen verschiedenartig konstruiert werden können.

Der Schweißbrenner gemäß der vorliegenden Erfindung zeichnet sich durch einfache Bauart, hohe Flexibilität der Verbindung eines gasgekühlten Schweißbrennerkörpers oder wassergekühlten Schweißbrennerkörpers mit einem Schweißbrennergriff und einem gasgekühlten Schlauchpaket oder wassergekühlten Schlauchpaket aus.

## Patentansprüche

1. Schweißbrennerkörper (2), insbesondere WIG-Schweißbrennerkörper, mit einem Brennerhals (3), einem Elektrodenhalter (4) zur Aufnahme einer Schweißelektrode (5), einer Gasdüse (6) und einem im Brennerhals (3) angeordneten im Wesentlichen zylinderförmigen Steckelement (7) zur lösbaren Verbindung mit einem Aufnahmeteil (9) eines Schweißbrennergriffs (8), welches Steckelement (7) eine Einlassöffnung (16) für das Schutzgas (G) und einen mit der Einlassöffnung (16) verbundenen Gaskanal (10) zur Führung des Schutzgases (G) zur Gasdüse (6) aufweist und zur Übertragung eines Schweißstromes (I) zum Elektrodenhalter (4) ausgebildet ist, **dadurch gekennzeichnet, dass** der Gaskanal (10) vor dem distalen Ende (11) des Steckelements (7) in einer mantelseitig am Steckelement (7) angeordneten Einlassöffnung (16) mündet.

2. Schweißbrennerkörper (2) nach Anspruch 1, **dadurch gekennzeichnet, dass** das Steckelement (7) zur steckbaren Verbindung mit dem Aufnahmeteil (9) des Schweißbrennergriffs (8) ausgebildet ist und einen Brennerverschluss (12) aufweist, welcher zur Fixierung am Aufnahmeteil (9) des Schweißbrennergriffs (8), vorzugsweise um 180° verdrehbar, ausgebildet ist.

3. Schweißbrennerkörper (2) nach Anspruch 1 oder 2, **dadurch gekennzeichnet, dass** das Steckelement (7) einen Kanal (17) zur Zuführung eines Kühlmittels (K) und einen Kanal (18) zur Rückführung des Kühlmittels (K) aufweist, wobei der Kanal (17) zur Zuführung des Kühlmittels (K) mit einer im Wesentlichen zentralen Eintrittsmündung (19) am distalen Ende (11) des Steckelements (7) für das Kühlmittel (K) und der Kanal (18) zur Rückführung des Kühlmittels (K) mit einer mantelseitig am Steckelement (7) angeordneten Rückführöffnung (21) für das Kühlmittel (K) verbunden ist.

4. Schweißbrennerkörper (2) nach einem der Ansprüche 1 bis 3, **dadurch gekennzeichnet, dass** der Brennerverschluss (12) im Wesentlichen rohrförmig ausgebildet ist und an der Außenseite Fixierelemente (22) aufweist, welche mit komplementär gestalteten Fixierelementen (23) am Aufnahmeteil (9) des Schweißbrennergriffs (8) zusammenwirken.

5. Schweißbrennerkörper (2) nach einem der Ansprüche 1 bis 4, **dadurch gekennzeichnet, dass** das Steckelement (7) aus Metall, insbesondere Messing, und der Brennerverschluss (12) aus Kunststoff gebildet ist.

6. Schweißbrennergriff (8), insbesondere WIG-Schweißbrennergriff, mit einem Stromübertragungselement (32) mit einem zentralen Kanal (33), und einem Aufnahmeteil (9) zur lösbaren Verbindung mit einem Steckelement (7) eines Schweißbrennerkörpers (2), **dadurch gekennzeichnet, dass** ein zum zentralen Kanal (33) koaxial angeordneter zweiter Kanal (34) und ein weiterer koaxial zum zweiten Kanal angeordneter dritter Kanal (35) vorgesehen ist, wobei zwischen zweitem Kanal (34) und drittem Kanal (35) eine Verbindung (36) vorgesehen ist.

7. Schweißbrennergriff (8) nach Anspruch 6, **dadurch gekennzeichnet, dass** der erste Kanal (33) eine Mündung (37) im Zentrum des Aufnahmeteils (9), der zweite Kanal (34) eine Mündung (38) mantelseitig des Aufnahmeteils (9) und der dritte Kanal (35) eine Mündung (39) mantelseitig des Aufnahmeteils (9) aufweist.

8. Schweißbrennergriff (8) nach Anspruch 6 oder 7, **dadurch gekennzeichnet, dass** das Stromübertragungselement (32) aus einer Hülse (40) aus elektrisch leitfähigem Material mit axial angeordneten Schlitzen (41) zur Bildung des zweiten Kanals (34) und einer Spreizhülse (42) aus elektrisch isolierendem Material besteht, wobei der zentrale Kanal (33) im Inneren der Spreizhülse (42) verlaufend angeordnet ist.

9. Schweißbrennergriff (8) nach einem der Ansprüche 6 bis 8, **dadurch gekennzeichnet, dass** zumindest ein Abdichtelement (43, 44) zum Abdichten zumindest eines Kanals (33, 34, 35) vorgesehen ist.

10. Schweißbrennergriff (8) nach einem der Ansprüche 6 bis 9, **dadurch gekennzeichnet, dass** ein Rohr (45) zum Einschieben in den dritten Kanal (35) und gleichzeitigen Abdichten der Verbindung (36) vorgesehen ist.

11. Schweißbrennergriff (8) nach einem der Ansprüche 6 bis 10, **dadurch gekennzeichnet, dass** der Aufnahmeteil (9) an der Innenseite Fixierelemente (23) aufweist, welche mit komplementär gestalteten Fixierelementen (22) am Brennerverschluss (12) des Schweißbrennerkörpers (2) zusammenwirken.

12. Schweißbrennergriff (8) nach Anspruch 11, **dadurch gekennzeichnet, dass** ein Entriegelungselement (46) zum Entriegeln der Fixierung des Schweißbrennerkörpers (2) vorgesehen ist.

13. Schweißbrennergriff (8) nach einem der Ansprüche 6 bis 12, **dadurch gekennzeichnet, dass** im dritten Kanal (35) ein Rückschlagventil (47) angeordnet ist.

14. Schweißbrennergriff (8) nach einem der Ansprüche 6 bis 13, **dadurch gekennzeichnet, dass** am Schweißbrennergriff (8) ein Schalter (48) zum Ein- und Ausschalten des Schweißstromes (I) angeordnet ist.

15. Schweißbrenner (1), insbesondere WIG-Schweißbrenner, mit einem Schweißbrennerkörper (2) nach einem der Ansprüche 1 bis 5 und einem Schweißbrennergriff (8) nach einem der Ansprüche 6 bis 14.
